(19)

Europäisches
Patentamt
European
Patent Office
Office européen
des brevets

(11)  **EP 4 443 349 A1**

(12)  # EUROPEAN PATENT APPLICATION

(43)  Date of publication:
**09.10.2024  Bulletin 2024/41**

(21)  Application number: **23166945.8**

(22)  Date of filing: **06.04.2023**

(51)  International Patent Classification (IPC):
**G06N 20/20** *(2019.01)*     **G06N 3/045** *(2023.01)*

(52)  Cooperative Patent Classification (CPC):
**G06N 20/20; G06N 3/045**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71)  Applicant: **Utopia Music AG
6300 Zug (CH)**

(72)  Inventors:
• **Jimenéz, Pablo Alonso**
  **08013 Barcelona (ES)**
• **Favory, Xavier**
  **08041 Barcelona (ES)**
• **Lidy, Thomas**
  **1040 Wien (AT)**

(74)  Representative: **MERH-IP Matias Erny Reichl
Hoffmann
Patentanwälte PartG mbB
Paul-Heyse-Strasse 29
80336 München (DE)**

(54)  ## TRAINING METHODOLOGY FOR CONTRASTIVE LEARNING BASED ON ASSOCIATIVE METADATA

(57)      According to an aspect, there is provided an apparatus for performing the following. The apparatus maintains, in a memory, machine-learning model(s) for calculating similarity between two datasets. The apparatus obtains a dataset comprising data samples annotated with associative metadata and performs, for each data subset of the dataset formed by the associative metadata: dividing the data subset or a part thereof randomly to anchor and candidate datasets, evaluating, using the machine-learning model(s), similarity between the anchor and candidate datasets and selecting, for each data sample in the anchor dataset, a data sample of the candidate dataset based on the evaluating. The apparatus trains at least one or more machine-learning models using anchor-candidate data pairs.

101: Maintain, in memory, machine-learning model(s) for evaluating similarity between two sets of annotated data samples

102: Obtain dataset comprising data samples annotated with associative metadata

103: Data subset(s) remaining?   No / Yes

104: Select next data subset

105: Divide data subset or part thereof randomly to anchor and candidate datasets

106: Evaluate, using machine-learning model(s), similarity between anchor & candidate datasets

107: Select, for each data sample in anchor dataset, positive data sample of candidate dataset to form an anchor–candidate data pair

108: Train at least one machine-learning model using plurality of anchor–candidate data pairs

Fig. 1

**EP 4 443 349 A1**

**Description**

TECHNICAL FIELD

Various example embodiments relate to machine learning.

BACKGROUND

Contrastive learning is a popular approach for developing similarity models for a variety of different domains such as computer vision, natural language processing, or sound and music understanding. Contrastive learning methods operate by minimizing the distance between samples that are considered similar while increasing the distance for dissimilar samples. Hence, the way in which the selection of similar and/or dissimilar samples are selected has a large impact in the final performance of the similarity model.

BRIEF DESCRIPTION

According to an aspect, there is provided the subject matter of the independent claims. Embodiments are defined in the dependent claims. The scope of protection sought for various embodiments is set out by the independent claims.

The embodiments and features, if any, described in this specification that do not fall under the scope of the independent claims are to be interpreted as examples useful for understanding various embodiments.

BRIEF DESCRIPTION OF DRAWINGS

In the following, example embodiments will be described in greater detail with reference to the attached drawings, in which

    Figures 1 and 2 illustrate exemplary processes according to embodiments;
    Figures 3A, 3B and 3C illustrate different process steps of the process of Figure 1;
    Figure 4 illustrates an exemplary process according to embodiments; and
    Figure 5 illustrates an apparatus according to embodiments.

DETAILED DESCRIPTION OF SOME EMBODIMENTS

The invention and its embodiments are not limited to the examples described above but may vary within the scope of the claims.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, the term "embedding" or equally "embedding vector" refers to a representation of data or a data sample in an embedding space being a continuous vector space with a reduced number of dimensions compared to corresponding raw data vectors, i.e., data vectors before the embedding operation. It should be noted that, despite of this complexity reduction, a given embedding may still have, e.g., one or several thousands of dimensions. Embedding of data serves to facilitate use of machine learning on large inputs like sparse vectors or high-density signal such as images or audio. An embedding space can be designed to reflect a similarity measure. In this case, embeddings or two embedding vectors corresponding to similar data samples are located close to each other in the embedding space and, thus, the distance between two embeddings for two data samples, e.g., two audio tracks annotated with associative metadata, in the embedding space may be used for evaluating similarity of the two data samples.

As used herein, the term "associative metadata" for a given data sample may be defined as being any type of information associated with or attached to, or tagged to, the data sample and expressing or implying a relation or association between the data sample and one or more other data samples. Thus the associative metadata allows associating a data sample to at least one other sample. Said at least one other data sample may be associated with or tagged with the same associative metadata. The associative metadata may imply or define that the data sample belongs to a certain data subset which contains said data sample and one or more other data samples. Therefore, a subset defined by the associative metadata contains at least 2 data samples so that it can be considered associative metadata.

As used herein, the term "an audio track" may be defined as a single audio recording or a sound file. Audio tracks may contain a variety of sounds, such as music, dialogue and/or sound effects. The term "audio track" may refer, in some cases, to a single track of audio on a multi-track recording or to the multi-track recording as a whole. Moreover, in some cases, the term "audio track" may refer to a segment of an audio stream,

The same piece or notion of associative metadata may be annotated to multiple different data samples. All data samples associated with a given metadata notion are expected to be similar up to a certain extent. To give an example, if the data sample is an audio track (e.g., a song) or some segment thereof (e.g., a segment of an audio stream comprising the audio track in full or in part), the associative metadata may define an album of the audio track. Thus, the associative metadata defines that the data sample belongs to a data subset for the album containing said audio track and typically one or more other audio tracks.

As described above, contrastive learning may be used for developing similarity models for a variety of different domains, e.g., computer vision, natural language processing, or sound and music understanding. Contrastive learning methods operate by reducing the distance between samples that are considered similar while, in contrast, increasing the distance for dissimilar samples. Early contrastive learning approaches employ triplets of anchor, positive, and negative data samples in order to reduce the anchor-positive distance, i.e., similar pair distance, while increasing the anchor-negative- distance, i.e., dissimilar pair distance. Some recent approaches do not rely on explicitly defining negative pairs, and instead, for each anchor, they consider as negative all the samples within a training batch. While the embodiments to be discussed take advantage of these latter approaches and obviate the selection of negative pairs, they are not specific to any implementation of contrastive learning, and they could be combined with any contrastive learning form by using any existing strategy for the selection of negative samples.

The embodiments to be discussed related in particular to the latter contrastive learning approaches using associative metadata to create the positive pairs. Associative metadata is any type of information attached or tagged to the input data - or input data samples - expressing a relation or an association between two or more data items. For example, in the music domain, the artist's name may be considered associative metadata, as several songs can belong to the same artist. However, the title of a song may not be considered associative metadata, since even if two tracks share the same title, they are not necessarily related, for example, "Learning to Fly" by the Tom Petty & the Heartbreakers is a completely different song compared to "Learning to Fly" by Pink Floyd.

Using associative metadata to select the similar pairs for contrastive learning is beneficial for creating accurate similarity models. However, not every pair of two data samples that are associated with each other according to their associative metadata should be considered equally good for training. The embodiments to be discussed below provide a contrastive learning training approach that allows retrieving relevant similar pairs from the subset of elements associated by associative metadata. The embodiments provide the benefit of improving the relevance of training pairs of data samples used for training an encoder for similarity calculations resulting in more accurate similarity models and faster training times.

One of the possible applications for the similarity models trained according to the training approach according to embodiments is the evaluation of music similarity, i.e., for example similarity of songs and other pieces of music provided as audio tracks. Music similarity models are important building blocks for products related to music search, classification, tagging, and recommendation. For example, the proposed contrastive learning training approach may be employed, in the music domain, for:

1) creating music embedding models that allow improving audio-based music search engines,
2) creating music embedding models that allow improving our audio-based music recommendation engines and/or
3) as a pre-training stage, training machine learning models for music classification and tagging.

The embodiments are, however, not limited to this particular application domain. Instead, contrastive learning approaches with supervision based on associative metadata as described in connection with embodiments may be applied also to other domains, and may be particularly useful for those application domains where large amounts of associative metadata are available, e.g., for data sources which comprise metadata such as biomedical images, or document or book collections.

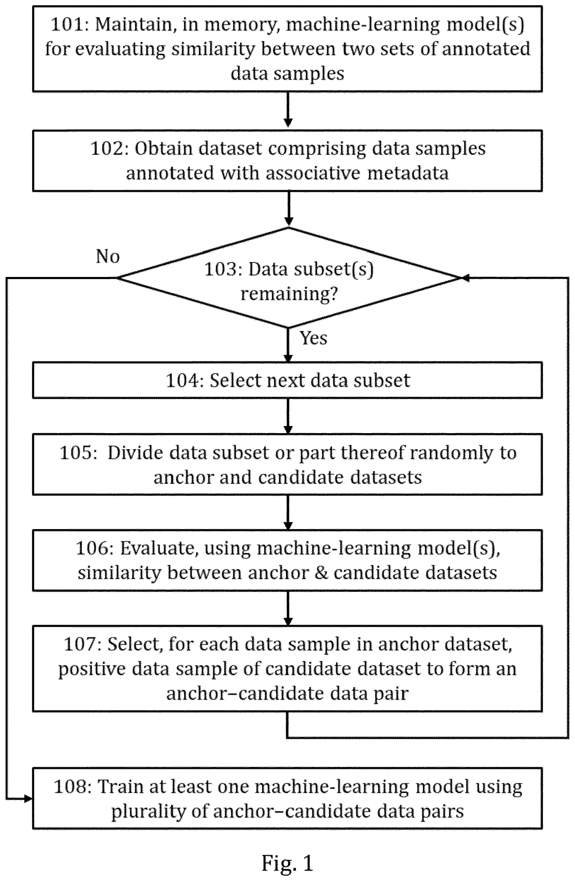

Figure 1 illustrates a process according to an embodiment for data sample pair selection for contrastive learning. The illustrated process may be performed by an apparatus which may be, for example, a computing device, e.g., a server, a laptop computer or a desktop computer. The computing device may be a centralized or distributed computing device.

Referring to Figure 1, the apparatus is assumed to initially maintain, in block 101, in a memory, one or more machine-learning models or equally one or more machine-learning algorithms for evaluating (or assessing or estimating) similarity between two datasets. The one or more machine-learning models may be pre-trained at least to a certain extent. The similarity may be evaluated using the one or more machine-learning models specifically per data sample pair for all data sample pairs, where each data sample pair comprises one data sample from a first dataset of the two datasets and one data sample from a second dataset of the two datasets. The similarity may be evaluated by calculating value(s) of a similarity metric such as a cosine distance.

The similarity between two annotated datasets may be evaluated using the one or more machine-learning models, for example, by calculating a similarity matrix based on the two datasets. The similarity matrix serves to quantify similarity of the data samples in the two datasets. The rows of the similarity matrix may correspond, respectively, to the data samples of a first dataset of the two datasets and the columns of the similarity matrix may correspond, respectively, to the data samples of a second dataset of the two datasets or vice versa. In other words, each row, or alternatively column, of the similarity matrix represents the distance between a data sample from the first dataset from the first dataset and each of the second dataset. Thus, each element of the similarity matrix provides information regarding similarity between a particular data sample of the first dataset and a particular data sample of the second dataset.

The data samples, as mentioned here and in the following, may correspond, e.g., to audio tracks such as songs or some other pieces of music or non-music audio tracks, videos, images, literary works such as novels, poems, short stories or plays, non-fiction pieces of writing such as articles, academic papers, blog posts or theses or textual documents. In some embodiments, the data samples may correspond to audio tracks (which may be, e.g., segments of a stream). All the data samples discussed in connection with Figure 1 may be of the same type so that it is possible and meaningful to compare their similarity relative to each other.

All or at least some of the one or more machine-learning algorithms may be based on one or more artificial neural networks (ANN) of one or more different types comprising, for example, neural network architectures featuring fully-connected, convolutional, recurrent, and/or attention layers. In some embodiments, the one or more ANNs may comprise (or feature) residual connections and/or positional embeddings. It will be well understood that these are non-limited examples, and neural networks may combine different types of layers.

In some embodiments, the one or more machine-learning algorithms may comprise a machine-learning-based encoder, called hereinafter "encoder", for calculating embeddings of data samples. An embedding as used in connection with embodiments may be equally called an embedding vector.

In some embodiments, the encoder may be or comprise at least one neural network such as at least one residual neural network and/or at least one convolutional neural network (though any of the other types of ANNs or layers thereof mentioned above may also be applicable here). In some embodiments, the at least one neural network (or some of them) may employ the ResNet50 or the VGGish architecture. Alternatively or additionally, the encoder may comprise other hybrid attention/convolutional, or fully attention-based neural networks.

The encoder may take, as an input (at a time), a data sample and output, based on the data sample, an embedding. Additionally or alternatively, the encoder may take, as an input (at a time), a set (or a batch) of data samples and output, based on the set of data samples, a corresponding set (or a batch) of embeddings. In this latter case, the encoder may implement a plurality of parallel processing tracks for processing the data samples in said set in parallel.

In addition to the encoder, the one or more machine-learning algorithms may comprise a machine-learning-based similarity model (later called just "similarity model") for evaluating similarity between embeddings in the first and second sets of embeddings received from the encoder. As described above, the evaluating of the similarity may be implemented, for example, by calculating a similarity matrix based on the first and second sets of embeddings received from the encoder. The first and second sets of embeddings may be assumed to be calculated, by the encoder, based on first and second datasets of data samples, respectively. The similarity matrix provides information on similarity (or a distance measure) between the first set of embeddings and the second set of embeddings. As the first and second sets of embeddings are representations of the first and second datasets input to the encoder, the similarity matrix provides equally information regarding the similarity between the first set of data samples and the second set of data samples. As described above, the rows of the similarity matrix may correspond, respectively, to the data samples associated with the first set of embeddings and the columns of the similarity matrix may correspond, respectively, to the data samples associated with the second set of embeddings or vice versa.

The similarity model may be a bilinear similarity model or equally a bilinear similarity projector. The bilinear similarity model (or bilinear similarity projector) may be defined as a model that receives as input two datasets of anchor and positive (or candidate) embeddings and outputs a similarity matrix expressing the similarity between every anchor/positive pair of embeddings. The bilinear similarity model may be based, e.g., on one or more ANNs of one or more different types (comprising, for example, fully connected layers, convolutional layers, recurrent layers, attention layers) followed by an operation that computes the similarity matrix between the anchor and positive samples that corresponds to the bilinear similarity. Thus, the similarity matrix produced by the similarity model may provide information on bilinear similarity or bilinear distance between the data samples of the first and second datasets of embeddings. In some embodiments, a numerical metric other than the bilinear similarity (e.g., cosine distance) may be employed.

The similarity model may be or comprises, for example, a multilayer perceptron (MLP) and a bilinear similarity layer implementing a bilinear similarity projector. A multilayer perceptron is a fully connected feedforward artificial neural network. As used herein, the term "multilayer perceptron" may refer, in particular, to networks composed of one or more fully-connected layers (with activation functions). In general, the MLP may comprise an input layer, one or more hidden layers and an output layer. For example, the MLP as used in connection with embodiments may be a single-hidden-layer perceptron with multiple hidden dimensions, e.g., at least 100 hidden dimensions. A hidden dimension is the number of dimensions of the hidden layer.

In some embodiments, the MLP may be followed by a layer normalization and a tanh (hyperbolic tangent) activation function. After this, the projections for the anchor and candidate datasets are input into the bilinear similarity layer similar to the COLA, COntrastive Learning for Audio, model. The output of the similarity model may be a set of similarity values corresponding to the different anchor-candidate data pairs formed by data samples of the anchor dataset and candidate dataset or a similarity matrix between the anchor and candidate datasets.

The apparatus obtains, in block 102, a dataset comprising data samples annotated with associative metadata. Here, the data samples in the dataset may form one or more data subsets based on the associative metadata, or the apparatus may form or create one or more data subsets of the dataset based on the associative metadata. Each of the one or more data subsets comprises a plurality of data samples. The data subsets may correspond, in music-related applications, for example, to playlists or other sets of audio tracks such as audio tracks of a certain artist or user listening histories. It may be assumed that at least some of the data samples are associated with the same metadata, e.g., belong to the same playlist.

In some embodiments, the obtaining in block 102 may comprise receiving the dataset comprising the data samples annotated with the associative metadata via at least one interface of the apparatus or retrieving the dataset comprising the data samples annotated with the associative metadata from the memory.

In some embodiments, the one or more data subsets may form a plurality of data subsets based on the associative metadata. At least two of the plurality of data subsets may be, partially or even fully, overlapping data subsets, that is, at least one data sample of a first data subset of the plurality of data subsets may be included also in a second data subset of the plurality of data subsets. In other cases, the plurality of data subsets may be disjoint or non-overlapping sets. At least some of the plurality of data subsets may have a different number of data samples.

In some embodiments, the one or more data subsets may consist of a single data subset. In other words, the dataset may effectively have no subset division.

In some applications, for example, where the data samples correspond to audio tracks or videos, the associative metadata may correspond, fully or at least in part, to user consumption data. The user consumption data may define lists, such as playlists or user listening histories, identifying data samples consumed by a user or a group of users, such as a user of a music streaming application or listeners of a radio station. More detailed description of the associative metadata in music-related application is provided below following the discussion of Figures 1, 2, 3A, 3B and 3C.

After the obtaining in block 102, the apparatus performs, for each of one or more data subsets in the obtained dataset, pair selection in blocks 103 to 107, where the one or more data subsets may comprise all or only some of the data subsets formed by the obtained dataset. Pair selection is the process of dividing the dataset into anchor-positive pairs, equally called anchor-candidate data pairs, suitable for training the one or more machine-learning models, e.g., an encoder and a similarity model, in a contrastive learning setup.

First, the apparatus checks, in block 103, whether there are still data subsets which have not yet been through the pair selection process of blocks 104 to 107. In response to determining that there are still data subsets which have not been through pair selection in block 103, the apparatus selects, in block 104, the next data subset for processing. Here, "the next data subset" may be any of the remaining data subsets.

The apparatus may divide, in block 105, the selected data subset randomly to anchor and candidate datasets. The anchor and candidate datasets may comprise or consist of an equal number of data samples, assuming an even number of data samples is available in the data subset. The data samples in the anchor dataset may be equally called anchor data samples, and the data samples in the candidate dataset may be equally called candidate data samples.

Alternatively, the apparatus may divide, in block 105, at least a part or a subset of the selected data subset randomly to anchor and candidate datasets. This may be relevant especially when the selected subset has an odd number of data samples and thus equal division into two disjoint or non-overlapping subsets of said selected subset is not possible. In such a case, the apparatus may discard one data sample or some other odd number of data samples from the data subset before forming the anchor and candidate datasets. The at least one data sample to be discarded may be selected, e.g., randomly.

In summary, the apparatus may select, in block 105, anchor and candidate datasets, being disjoint sets of equal size, randomly from the selected data subset.

In some embodiments, any data samples which have already been selected previously to an anchor dataset or to a candidate dataset (during the pair selection process carried for another data subset) may be omitted from the anchor and candidate datasets, as will be described below in further detail.

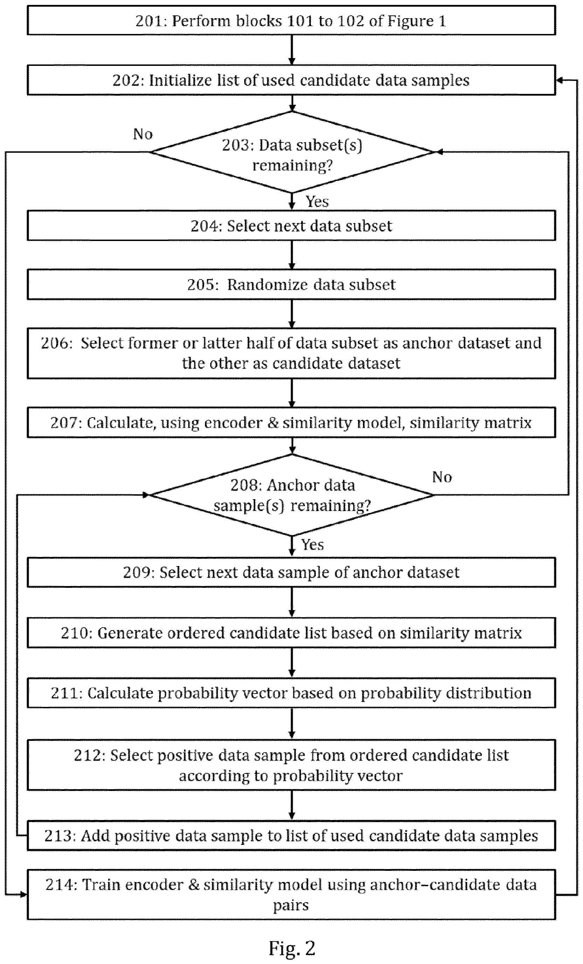

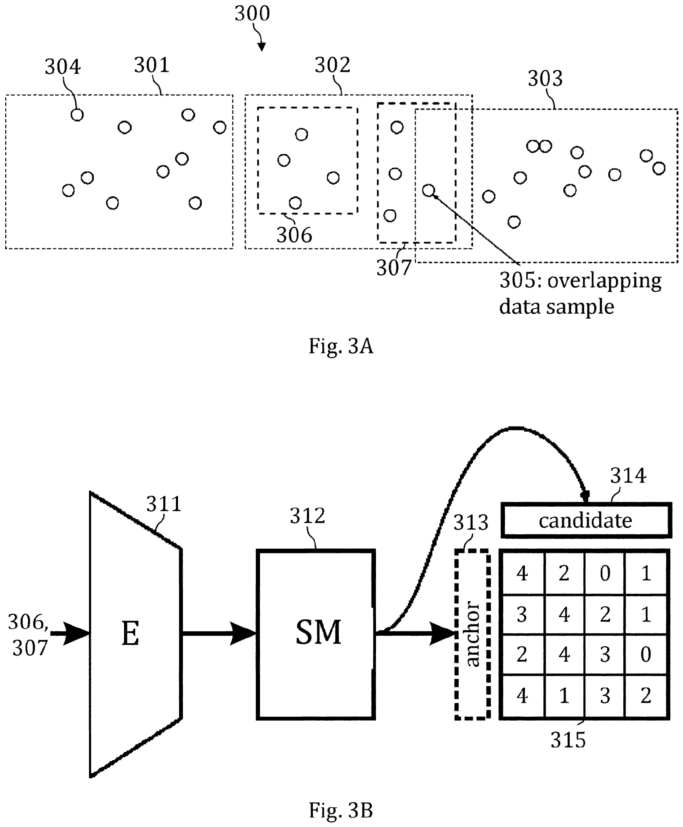

The apparatus evaluates, in block 106, using the one or more machine-learning models, e.g., using the encoder and the similarity model, similarity between the anchor dataset and the candidate dataset. As described above, the similarity may be evaluated separately for each unique combination of an anchor data sample and a candidate data sample. If the one or more machine-learning models comprise the encoder and the similarity model, the apparatus may, first, calculate first and second sets of embeddings, using the encoder, based on the anchor and candidate datasets, respectively, and then evaluate the similarity using the similarity model based on the first and second sets of embeddings received from the encoder. This step is discussed in further detail in connection with Figures 2 and 3B.

In some embodiments, the evaluating of the similarity between the data samples of the anchor dataset and the candidate dataset in block 106 comprises calculating, using the one or more machine-learning models, a similarity matrix between the data samples of the anchor dataset and the candidate dataset. In particular, the similarity model may be configured or set up to calculate the similarity matrix based on the first and second sets of embeddings received from the encoder.

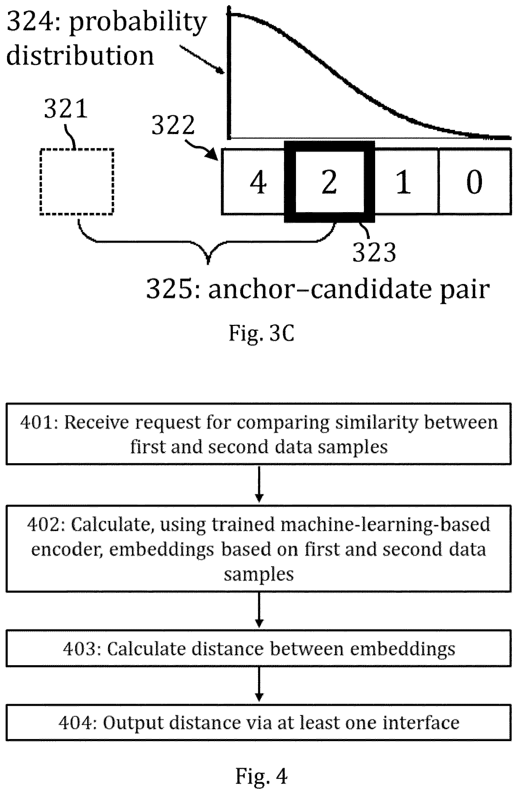

The apparatus selects, in block 107, for each data sample in the anchor dataset, a (positive) data sample of the candidate dataset based on the evaluating of block 106 to form an anchor-candidate data pair. Thus, altogether one or more anchor-candidate data pairs are formed for the one or more data samples in the anchor dataset, respectively. The selecting in block 107 may be based on a set of similarity values corresponding to the different anchor-candidate data pairs formed by data samples of the anchor dataset and candidate dataset evaluated in block 106 or a similarity matrix between the anchor and candidate datasets calculated in block 106. The selection in block 107 is performed by sampling from a probability distribution. The probability distribution may be, for example, a Gaussian distribution, a beta distribution, a gamma distribution or a uniform distribution. The probability distribution may be defined so that, according to the probability distribution, high similarity data samples have a higher probability of selection, or at the very least equal probability of selection, compared to low similarity data samples. In other words, instead of always selecting the best, i.e., the most similar, candidate data sample for a given anchor data sample, here randomness is introduced into the pair selection so that the best candidate data sample is selected most often out of all the data samples in the candidate dataset though not always. By introducing this stochasticity to the pair selection by the use of the probability distribution, overfitting to certain pairs is prevented or at least alleviated and pair diversity is promoted. The probability distribution may be provided, for example, as a probability density function (PDF). This step is discussed further in connection with Figures 2 and 3C.

The selection of the (positive) data sample(s) of the candidate dataset in block 107 may be carried out so that a unique candidate data sample is selected for each anchor data sample. In other words, a given candidate data sample is mapped only to a single anchor data sample. To enable this, the apparatus may remove any candidate data sample from further consideration upon being paired with an anchor data sample. For example, the apparatus may maintain, in a memory, a list of used candidate data samples for this purpose.

Following the selection of the anchor-candidate data pair in block 107, it is, again, checked, in block 104, whether there are still data subsets which have not yet been through the pair selection process of blocks 104 to 107. In response to determining that there are still data subsets which have not been through pair selection in block 104, the pair selection process of blocks 104 to 107 is repeated for the next data subset. This process is repeated until all of the one or more data subsets have gone through the pair selection process.

In response to finally determining that there are no data subsets which have not been through pair selection in block 103, the apparatus trains, in block 108, at least one of the one or more machine-learning models (e.g., at least the encoder) using a plurality of anchor-candidate data pairs generated via the pair selection. The plurality of anchor-candidate data pairs may comprise all the anchor-candidate data pairs generated for the one or more data subsets or at least a part thereof. The apparatus may train the at least one of the one or more machine-learning models until an epoch is reached (i.e., until all the plurality of anchor-candidate data pairs generated via the pair selection have been visited).

After the training in block 108, the pair selection process of blocks 103 to 108 may be repeated one or more times using the dataset which was obtained in block 102 (not explicitly shown in Figure 1). Due to the randomness involved in the pair selection, different anchor-candidate data pairs are selected each time the pair selection process is repeated (or at least in most practical cases the chances of selecting the same anchor-candidate data pairs in a row are extremely small). Each successive iteration of the process serves to further improve the at least one of the one or more machine-learning models which is trained, which subsequently improves the quality of the similarity estimations in the next pair selection algorithm execution. The process of pair selection and successive training may be repeated, for example, until convergence of a training loss is reached. The training loss may be considered converged when it has a value which is below a pre-defined limit or that is not further improved in a pre-defined number of epochs. The training loss may be, for example, (categorical) cross entropy loss performed on the similarity matrix.

In some embodiments, the machine-learning based similarity model may be combined with one or more latent space regularization techniques for improving accuracy of the machine-learning based similarity model.

In some embodiments, an Adam optimizer may be employed, by the apparatus.

In some embodiments, the apparatus may, following the completion of the training, output the trained machine-learning-based encoder to another computing device (e.g., a server). Said another computing device may be configured, for example, to implement a search, classification, tagging or recommendation engine for data samples (e.g., audio tracks) using the trained machine-learning algorithm for evaluating similarity between data samples. In general, said another computing device may be configured to implement any scheme for associating users to products or items.

Figure 2 illustrates another process according to an embodiment for (data sample) pair selection for contrastive learning. The illustrated process may be performed by an apparatus which may be, for example, a computing device (e.g., a server, a laptop computer or a desktop computer). The computing device may be a centralized or distributed computing device.

The process of Figure 2 may be considered one detailed implementation of the process of Figure 1. Thus, any of the definitions provided in connection with Figure 1 may apply, *mutatis mutandis,* also here.

Referring to Figure 2, the initial steps of the process may correspond fully to the process of Figure 1. Namely, the apparatus carries out, in block 201, the processes described in connection with blocks 101 to 102 of Figure 1 though here it is specifically assumed that the one or more machine-learning models maintained in block 101 comprise the encoder and the similarity model and that the similarity model is configured to calculate a similarity matrix based on two datasets (as described in connection with Figure 1). Thus, in short, the apparatus is assumed also here to maintain, in the memory, an encoder and a similarity model (both of which may be trained at least to some extent) and to obtain a dataset comprising a plurality of data samples annotated with associative metadata. The obtained dataset forms one or more data subsets based on the associative metadata, similar to the process of Figure 1.

The apparatus initializes, in block 202, a list of used candidate data samples. The initializing may comprise creating an empty list of used candidate data samples or removing all entries from an existing list of used candidate data samples. Thus, following block 202, the apparatus may maintain, in the memory, a list of used candidate data samples which is empty.

Blocks 203, 204 may correspond to blocks 103, 104 of Figure 1, respectively. Thus, the apparatus checks, in block 203, whether there are still data subsets which have not yet been through the pair selection process of blocks 204 to 213. In response to determining that there are still data subsets which have not been through pair selection in block 203, the apparatus selects, in block 204, the next data subset for processing. Here, "the next data subset" may be any of the remaining data subsets.

The apparatus randomizes, in block 205, the order of the plurality of data samples in the data subset.

Then, the apparatus selects, in block 206, one of a former half or a latter half of the data subset following the randomizing of block 206 as the anchor dataset and the other as the candidate dataset.

If the data subset has an odd number of data samples (and thus dividing the data subset into two halves is not possible), the apparatus may ignore one of the data samples of the data subset when performing the selection of block 206 (and possible also the randomizing in block 205). The data sample which is ignored may be, e.g., randomly selected or it may be, e.g., the first or last data sample before or after the randomization of block 205. Thus, in general, the apparatus may select, in block 206, one of a former half or a latter half of the data subset or of a part of the data subset following the randomizing of block 206 as the anchor dataset and the other as the candidate dataset.

In some embodiments, instead of first randomizing, in block 205, the order of the plurality of data samples in the data subset and then splitting the data subset into two halves in block 206, the apparatus may select anchor and candidate datasets in some alternative way from the data subset (possibly ignoring one or more data sample of the data subset). The anchor and candidate datasets may be selected, nevertheless, to have an equal number of data samples, and the selection may involve randomness. For example, the apparatus may select $n$ first data samples to the anchor dataset and the following $n$ data samples to the candidate dataset or vice versa, where $n$ is an integer from 1 to $M/2$ (if $M$ is an even number) or from 1 to $(M-1)/2$ (if $M$ is an odd number), $M$ being an integer indicating the total number of data samples in the data subset. To give another example, the apparatus may select $n$ random data samples to the anchor dataset and $n$ random data samples out of the data samples not selected as anchors to the candidate dataset or vice versa.

In some embodiments, if the data subset comprises an odd number of data samples, the apparatus may discard one data sample or other odd number of data samples from the data subset before the randomizing in block 205 and the selecting in block 206. The one or more data samples to be discarded may be selected, e.g., randomly. Thus, the randomizing and the selecting is carried out only for a part of the data subset.

The apparatus calculates, in block 207, a similarity matrix between the anchor and candidate datasets using the encoder and the similarity model, similar to as described in connection with block 106 of Figure 1.

Then, the apparatus selects, in blocks 208 to 213, for each data sample in the anchor dataset, a (positive) data sample from the candidate dataset based on the similarity matrix to form an anchor-candidate data pair.

Specifically, the apparatus first checks, in block 208, whether or not an anchor-candidate data pair has been selected for all the data samples of the anchor dataset. If this is not the case, the apparatus selects, in block 209, the next data sample of the anchor dataset for pair selection.

The apparatus generates, in block 210, an ordered candidate list of data samples of the candidate dataset ordered by similarity with the data sample of the anchor dataset based on the similarity matrix. Here, any candidate data samples in the list of used candidate data samples are left out of the ordered candidate list. The similarity values of data samples of the candidate dataset to be ordered may be read directly from the similarity matrix that is, from a row or a column, depending on how the similarity matrix is defined, corresponding to the selected anchor data sample currently under analysis, see Figures 3B and 3C for an example. The possible discarding of at least one data sample may be carried out thereafter. The ordered candidate list may be ordered, e.g., from high to low similarity values.

The apparatus calculates, in block 211, a probability vector based on a probability distribution applied or overlaid on the ordered candidate list. Here, the probability distribution is defined so that data samples of the ordered candidate list with high similarity (first positions) have a higher probability compared to data samples of the ordered candidate list with lower similarity (last positions). The probability vector comprises elements having values indicating selection probability of the data samples in the candidate dataset, respectively. The probability distribution may be generated as a part of block 211. The probability distribution may be dependent on the properties of the candidate dataset, e.g., its length. Figure 3C illustrates the probability density function attached to a considered probability distribution which is a Gaussian distribution in this example.

The probability distribution used in block 211 may have a zero mean. Here, the zero point, i.e., mean, of the probability distribution may be aligned with the beginning of the ordered candidate list, assuming that it has been ordered in descending order of similarity. The probability distribution may also have an absolute maximum at the zero point and/or be symmetric relative to the zero point. The ordered candidate list may extend from the zero point of the probability distribution along the positive semi-axis with high similarity values being closer to zero. The negative semi-axis of the distribution is not considered.

Moreover, the probability distribution may have a standard deviation equal to a length of the ordered list of data samples multiplied by $k$, where $k$ is a real number larger than or equal to zero. The parameter $k$ may have a value within the range (0, +oo), where a value of 0 makes the sampling process deterministic and always selects the most similar sample, and a value approaching $+\infty$ yields a uniform distribution where all the candidates are equally probable. A small value, such as 0.75, provides the most similar samples with higher probabilities while allowing some randomness in the process. At least in some embodiments, the probability distribution may be defined such that all of the data samples in the candidate dataset have a non-zero selection probability according to the probability distribution.

The apparatus selects, in block 212, a (positive) data sample from the ordered candidate list of the anchor data sample according to the probability vector. In other words, the apparatus makes a random selection (or a random observation) based on the probability vector elements of which are associated or mapped to the data samples of the candidate dataset. Thus, an anchor-candidate data pair is formed.

The apparatus adds, in block 213, the (positive) data sample of the candidate dataset to the list of used candidate data samples. Consequently, the same data sample cannot be selected to another anchor-candidate data pair.

After the adding in block 213, the process goes back to block 208, that is, the apparatus again checks, in block 208, whether or not an anchor-candidate data pair has been selected for all the data samples of the anchor dataset. If this not the case, the apparatus again selects, in block 209, the next data sample of the anchor dataset for pair selection and proceeds to process said next data sample in blocks 210 to 213.

Upon determining that an anchor-candidate data pair has been selected for all the data samples of the anchor dataset of the data subset currently under analysis in block 208, the process goes back to block 203, that is, the apparatus again checks, in block 203, whether there are still data subsets which have not yet been through the pair selection process of blocks 204 to 213.

Upon determining, in block 203, all data subsets of the dataset obtained in block 201 have been through the pair selection process of blocks 204 to 213, the apparatus trains, in block 214, the encoder and/or the similarity model using a plurality of anchor-candidate data pairs generated via the pair selection. The plurality of anchor-candidate data pairs may comprise all the anchor-candidate data pairs generated for the one or more data subsets or at least a part thereof.

After the training in block 214, the process of pair selection (blocks 203 to 213) and successive training (block 214) may be repeated with the same dataset obtained in block 201 one or more times, similar to as described in connection with Figure 1.

Figures 3A, 3B and 3C illustrate example scenarios relating to three different phases of the pair selection procedure according to embodiments (as discussed in relation to Figures 1 and 2).

Figure 3A illustrates a dataset 300 comprising first, second and third data subsets 301, 302, 303 as defined by the associative metadata relating to the dataset 300. The dataset 300 may correspond to a simplistic example of a dataset obtained in block 102 of Figure 1 or block 201 of Figure 2. Each of first, second and third data subsets 301, 302, 303 comprises a plurality of data samples 304, 305 annotated with associative metadata. To give a simple non-limiting example, the data samples of the first, second and third data subsets 301, 302, 303 may be audio tracks or segments thereof, and the first, second and third datasets 301, 302, 303 may be, for example, user listening histories of different users or different user-created playlists.

In the example of Figure 3A, one data sample 305 is comprised in both the second data subset 302 and the third data subset 303. In other words, the second and third data subsets 302, 303 are overlapping while the first and second data subsets 301, 302 and the first and third data subsets 301, 303 are non-overlapping. Figure 3A further illustrates the division of the second data subset 302 into an anchor dataset 307 and a candidate dataset 306 having equal size of three data samples.

Figure 3B illustrates the process of calculating the similarity matrix 315 based on the candidate and anchor datasets 306, 307. In Figure 3B, the (machine-learning-based) encoder receives, as inputs, the candidate and anchor datasets 306, 307 and outputs corresponding first and second sets of embeddings to the similarity model (SM). The similarity model may be, e.g., an MLP with a Bilinear Similarity layer. The similarity model outputs, based on the first and second sets of embeddings, a similarity matrix 315 indicating the (bilinear) distance between the anchor data samples 313 and the candidate data samples 314. In this example, the rows of the similarity matrix correspond to the anchor data samples 313 while the columns of the similarity matrix correspond to the candidate data samples 314. To give an example, the distance between the first anchor data sample and the first, second, third and fourth candidate data samples is, respectively, 4, 2, 0 and 1. Thus, the first candidate data sample is evaluated to be the most similar with the second anchor data sample out of all the candidate data samples in the second data subset 302.

It should be noted the values of the similarity matrix 315 given in Figure 3B are merely illustrative and are not intended to depict a realistic example of the similarity matrix.

Figure 3C illustrates the process of selecting, for an anchor data sample 321 in the anchor dataset 313, a (positive) data sample of the candidate dataset 314 based on the similarity matrix so as to form an anchor-candidate data pair 325. Here, the anchor data sample 321 is the first anchor data sample of the anchor dataset 313 of Figure 3B (corresponding to the top row of the similarity matrix 315). In particular, the selection is made from an ordered candidate list 322 defined for the first anchor data sample (i.e., a version of the top row of the similarity matrix 315 ordered by similarity score). The ordered candidate list 322 is arranged in descending order. A probability density function of a Gaussian probability distribution 324 is aligned with (or overlaid on) the ordered candidate list so that its maximum value aligns with the beginning of the ordered candidate list 322 (and thus with the most similar candidate data sample). A probability vector for the ordered candidate list 322 is defined based on the probability density function 324. Each of the values of the elements of the probability vector may be defined, for example, by evaluating the probability density function at the location of each candidate data sample. The selection of the positive candidate data sample is carried out by sampling from said probability vector. In this example, the second element 323 of the ordered candidate list (i.e., the element having the second highest similarity value) is selected as the candidate for forming the anchor-candidate data pair 325 with the anchor data sample 321.

As was mentioned above, the embodiments described in connection with Figures 1, 2, 3A, 3B and 3C may be used, for example, in connection with music-related applications. In such applications, the data samples (e.g., the data samples comprised in the dataset obtained in block 102 of Figure 1 or in block 201 of Figure 2 and/or shown in Figure 3A) are audio tracks and/or segments of audio tracks. In particular, said audio tracks may be pieces of music (e.g., songs). The segments of audio tracks may have a pre-defined length in time and/or a pre-defined start and/or end (time) point within the full audio track. For example, each segment may be a 30-second segment taken from the beginning of the full audio track. The pre-defined segment of an audio track may be extracted from the full audio track by the apparatus performing the pair selection and the training or by some apparatus beforehand (so that the dataset obtained in block 102 of Figure 1 or block 201 of Figure 2 comprises the segments of audio tracks).

The audio tracks or segments thereof used for the training may be transformed into, for example, mel-spectrogram representations. A given mel-spectrogram x (to be input to an encoder or other machine-learning model) may satisfy $x \in \mathbb{R}^{T \times F}$, where T is the number of timestamps and F is the number of (audio) frequency bins. In other embodiments, some other audio representations may be employed.

In music-related applications, each data sample (i.e., each audio track or segment thereof) of the dataset obtained in block 102 of Figure 1 or block 201 of Figure 2 is annotated with associative metadata, similar to any other data sample mentioned in connection with embodiments. The associative metadata of the data samples of the dataset may be used for forming one or more subsets of data samples. The associative metadata for a given data sample may comprise editorial data and/or user consumption data.

The editorial data associated with an audio track (or with a data sample) may comprise, for example, one or more of the following:

> at least one artist or at least one performer of the audio track,
> at least one composer of the audio track,
> at least one writer of the audio track,
> at least one lyricist of the audio track,
> at least one album in which the audio track appears,
> at least one producer of the audio track,
> at least one record label associated with the audio track,
> at least one country of origin of the audio track,
> at least one language of the audio track or
> a year of release of the audio track.

Thus, the editorial data of an audio track may define basic (non-user-consumption-related) information regarding the audio track (e.g., a song) itself.

In some embodiments, the editorial data comprised in the associative metadata for the audio tracks contained in the dataset obtained in block 102 of Figure 1 or block 201 of Figure 2 may comprise at least the at least one artist or the at least one performer of the audio track.

The user consumption (meta)data for an audio track may comprise any information relating music consumption habits or behavior of one or more users associated with the audio track. The user consumption data for an audio track may comprise at least one of:

> information identifying at least one user-created set of audio tracks to which the audio track belongs,

information identifying at least one user-related set of audio tracks to which the audio track belongs, the least one user-related set of audio tracks having been created or formed (implicitly) based on user listening behavior, or

information identifying at least one editorial playlist to which the audio track belongs.

It should be emphasized that the term "user-created" in "user-created set of audio tracks" refers to the set (e.g., a playlist) of audio tracks being user-created, not the audio tracks themselves. The at least one user-created set of audio tracks may comprise sets of audio tracks created by a user, e.g., using a music streaming application. The at least one user-related set of audio tracks may comprise, for example, at least one user listening history and/or at least one set of audio track relating to user's interaction with a digital library of audio tracks (e.g., containing liked, disliked, skipped, favorited, saved or tagged audio tracks of a user) or a set formed based on user's audio track, artist or album play count. The at least one editorial playlists may comprise, for example, DJ setlists and/or radio program tracklists. Since consumption metadata encodes some human judgments of music that is similar or that fit in a similar context, it may be especially appropriate for learning similarity notions. Also, while editorial relations are normally one- or few-to-many (e.g., album-to-songs), consumption is many-to-many (e.g., playlists-songs), resulting in a denser co-occurrence space that may favor associating more diverse music.

In some embodiments, the associative metadata for the audio tracks contained in the dataset obtained in block 102 of Figure 1 or block 201 of Figure 2 may comprise at least the user consumption data.

In the following paragraph, a concrete example of an encoder and a similarity model usable at least in connection with music-related applications where the data samples correspond to audio tracks is provided. In such applications, the encoder may be or comprise a ResNet50 model considering its good performance in audio and music applications. In the ResNet50 mode, the output of the last dense layer may be reduced with global max- and mean-pooling. The resulting vectors may be concatenated so as to implement an output embedding of multiple thousands of dimensions (e.g., 4 096 dimensions). The input representation of an audio track to be fed to the ResNet50 model may be a mel-spectrogram with, e.g., 96 bands and 256 timestamps. The similarity model is a single-hidden-layer MLP with, e.g., 128 hidden dimensions followed by layer normalization, a tanh activation, and a bilinear similarity layer.

Another example of a machine-learning-based encoder which may be well-suited especially for music-related application is VGGish which is a variant of the VGG architecture used commonly in the audio domain. It may have, for example, 128 output dimensions.

In this paragraph, a non-limiting example of a practical training scenario for a music-related application is described. In this example, a dataset of nearly 2 000 000 audio tracks with associative metadata is used to create about 1 000 000 subsets. The pair selection algorithm is run at the beginning of each epoch resulting in a list of positive anchor-candidate data pairs. These pairs are fed into the encoder and the bilinear similarity model and trained for one epoch (visiting all the pairs). This process is repeated until convergence of the training loss or after a target number of epochs is reached. Note that every time the pair selection algorithm is run, it uses an updated version of the encoder and the similarity model, so the quality of the similarity estimations is expected to increase. Categorical cross-entropy training loss using a batch size of 384 pairs is used for evaluating the progress of the training. Additionally, an Adam optimizer with parameters $\beta_1$ = 0.9 (momentum term) and $\beta_2$ = 0.999 (shrinkage term) is used for improving the accuracy of the encoder and the bilinear similarity model. The learning rate of the Adam optimizer is increased linearly from 0 to 0.0001 for the first 5 000 steps and then decreased following a cosine decay until the encoder and the bilinear similarity model complete 50 epochs. The encoder and the bilinear similarity model are trained on 96-band, 256-timestamp (~3 seconds) mel-spectrogram patches randomly selected at each iteration from the 30-seconds excerpts available for each audio track.

It should be noted that the division of the associative metadata to editorial data and user consumption data may be applicable also to other application domains where data samples are consumed (in one way or another) by users (that is, not only audio domain). For example, analogous editorial and user consumption data categories may be defined also for, e.g., data samples which correspond to videos (e.g., videos of a video sharing platform), non-music-related audio tracks (e.g., podcasts, standup comedy or audiobooks), articles, literary works, images or other types of creative works.

After the encoder and the similarity model (or at least the encoder) have been trained as described in connection with any of Figures 1, 2, 3A, 3B and 3C, the bilinear similarity model may be discarded and the embeddings producible by the encoder based on any two data samples may be used for evaluating the similarity between said two data samples. An exemplary process according to embodiments for carrying out this functionality is illustrated in Figure 4. The illustrated process may be performed by an apparatus which may be, for example, a computing device. The computing device may be, e.g., a server, a laptop computer or a desktop computer. The computing device may be a centralized or distributed computing device. The computing device carrying out the process of Figure 4 may be the same apparatus which carried out the training according to the process of Figure 1 or 2 or a different apparatus than the apparatus which carried out the training according to the process of Figure 1 or 2. In the latter case, the two apparatuses may be communicatively connected so that the trained encoder may be communicated to the computing device using it.

Referring to Figure 4, it may be assumed that the apparatus carrying out the illustrated process has access to a machine-learning-based encoder which has been trained according to the process of Figure 1 or Figure 2 (possibly also taking into the discussion relating to Figures 3A, 3B and 3C). For example, the trained machine-learning encoder may be maintained initially in a memory of the apparatus.

The apparatus receives, in block 401, a request for comparing similarity between first and second data samples. The request may be received, for example, from another computing device over at least one communication network and/or at least one communication link. Alternatively, the request may be received via a user interface of the apparatus, that is, a user may request the comparison using at least one user input device comprised in or attached to the apparatus. The request may comprise the first and second data samples or this information may be assumed to be maintained, in the memory, of the apparatus or be retrievable by the apparatus from one or more local and/or remote databases.

The apparatus calculates, in block 402, using the trained machine-learning-based encoder, two embeddings based on the first and second data samples

The apparatus calculates, in block 403, a distance between the two embeddings corresponding to the first and second data samples. The distance may be a numerical distance such as a cosine distance or a Euclidean distance.

The apparatus outputs, in block 404, the distance (e.g., the cosine distance or the Euclidean distance) via at least one interface. The at least one interface may comprise one or more interfaces for connecting to other apparatuses (or computing devices) and/or at least one user interface (e.g., for displaying information via a display). The request may be outputted at least back to the entity (being an apparatus or a user) from which the request was received in block 401.

In some embodiments, a machine-learning-based encoder trained using a computer-implemented method as described in connection with any of Figures 1, 2, 3A, 3B and/or 3B may be employed as a part of a search, classification, tagging or recommendation engine. The search, classification, tagging or recommendation engine may be run by an apparatus (e.g., a server) which the same or different compared to the apparatus which is used for training the encoder (and the similarity model). The search or recommendation engine may comprise at least some of the functionalities described in connection with Figure 4. In music-related embodiments where the data samples are audio tracks or segments of audio tracks, the search, classification, tagging or recommendation engine may be a music search, classification, tagging or recommendation engine.

In some embodiments, a machine-learning-based encoder trained using a computer-implemented method as described in connection with any of Figures 1, 2, 3A, 3B and/or 3B may be employed as a part of any system for associating users to products or items.

The embodiments described above provide at least the following benefits.

- Due to the use of the specific contrastive learning method described, no negative-sampling strategy is required.
- The use of associative metadata annotated to the data samples in connection with the contrastive learning solutions according to embodiments provides the following benefits: 1) associative information is typically readily available without requiring, e.g., use of an explicit human annotation process and 2) associative metadata is typically not limited to a specific taxonomy so it is more flexible for combinations and extensions, facilitating the creation of larger datasets.
- The use of a bilinear similarity model (as opposed to, e.g., a cosine similarity model) has been shown to have a positive impact on the learned similarity space.
- The pair selection procedure according to embodiments allows models to converge in less time than standard approaches with fully random pair selection.

When applied to music-related applications, the embodiments described above provide at least the following further benefits:

- Similarity estimations provided by embodiments are more correlated with music similarity as perceived by humans than previous solutions.
- Use of consumption metadata in particular in connection with embodiments is beneficial as this type of data is easy to obtain and scale up, making it easy to train models in larger datasets potentially improving their performance.

The blocks, related functions, and information exchanges described above by means of Figures 1, 2 and 4 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

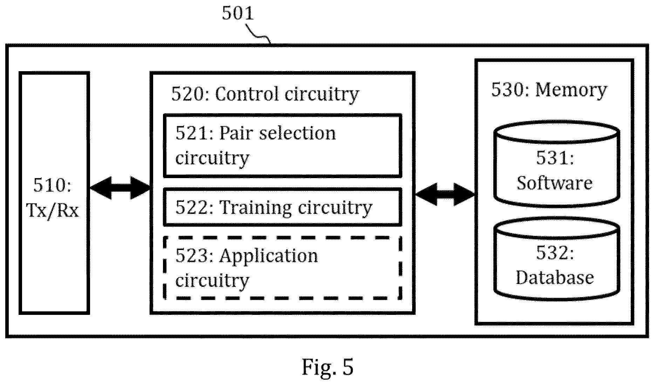

Figure 5 provides an apparatus 501 (e.g., a computing device) according to some embodiments. Figure 5 may illustrate an apparatus configured to carry out at least the functions described above in connection with pair selection and training using selected anchor-candidate data pairs corresponding to data samples annotated with associative metadata.

The apparatus 501 may comprise one or more control circuitry 520, such as at least one processor, and at least one memory 530, including one or more algorithms 531, such as a computer program code (software) wherein the at least one memory and the computer program code (software) are configured, with the at least one processor, to cause, respectively, the apparatus to carry out any one of the exemplified functionalities relating to the pair selection and the training using selected anchor-candidate data pairs as described above.

Referring to Figure 5, the control circuitry 520 of the apparatus 501 comprises at least pair selection circuitry 521. The pair selection circuitry 521 may be configured to carry out at least some of the functionalities described above by means of any of blocks 102 to 107 of Figure 1, blocks 201 to 213 of Figure 2, Figure 3A, 3B and/or 3C using one or more individual circuitries. The control circuitry 520 of the apparatus 501 further comprises training circuitry 522. The training circuitry 522 may be configured to carry out at least some of the functionalities described above by means of any of blocks 101, 108 of Figure 1 and/or blocks 201, 214 of Figure 2 using one or more individual circuitries.

The control circuitry 520 of the apparatus 501 may optionally also comprise application circuitry 523 for performing similarity estimation using at least one trained machine-learning model (e.g., the trained encoder). The application circuitry 523 may be configured to carry out at least some of the functionalities described above by means of Figure 4 using one or more individual circuitries.

The at least one memory 530 may comprise at least one database 532. The at least one database 532 may comprise, for example, one or more machine-learning models (e.g., an encoder and a similarity model). Each memory 530 may comprise software and at last one database. The memory 530 may also comprise other databases which may not be related to the functionalities of the apparatus according to any of presented embodiments. The at least one memory 530 may be implemented using any suitable data storage technology, such as semiconductor based memory devices, flash memory, magnetic memory devices and systems, optical memory devices and systems, fixed memory and removable memory.

Referring to Figure 5, the apparatus 501 may further comprise different interfaces 510 such as one or more communication interfaces (TX/RX) comprising hardware and/or software for realizing communication connectivity over one or more communications network and/or one or more communication links according to one or more communication protocols. Specifically, the one or more interfaces 510 may provide the apparatus with communication capabilities to communicate with one or more other apparatuses (e.g., computing devices). The one or more interfaces 510 may comprise standard well-known components such as an amplifier, filter, frequency-converter, analog-to-digital converts, (de)modulator, and encoder/decoder circuitries, controlled by the corresponding controlling units, and one or more antennas. The interfaces 510 may comprise at least one user interface.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hardware circuit or processor (or multiple processors) or a portion of a hardware circuit or processor and its (or their) accompanying software and/or firmware. The term 'circuitry' also covers, for example and if applicable to the particular claim element, a baseband integrated circuit for an access node or a terminal device or other computing or network device.

In an embodiment, at least some of the processes described in connection with of Figures 1, 2, 3A, 3B, 3C and/or 4 may be carried out by an apparatus comprising corresponding means (e.g., processing means) for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1, 2, 3A, 3B, 3C and/or 4 or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chipset (procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1, 2, 3A, 3B, 3C and/or 4 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A computer-implemented method comprising:

maintaining, in a memory, one or more machine-learning models for evaluating similarity between data samples of two datasets;
obtaining a dataset comprising data samples annotated with associative metadata, wherein the data samples in the dataset form one or more data subsets based on the associative metadata;
performing, for each of the one or more data subsets, pair selection by:

dividing the data subset or a part thereof randomly to anchor and candidate datasets,
evaluating, using the one or more machine-learning models, similarity between data samples of the anchor dataset and data samples of the candidate dataset, and
selecting, for each data sample in the anchor dataset, a positive data sample of the candidate dataset based on the evaluating and using a probability distribution so as to form an anchor-candidate data pair; and

training at least one of the one or more machine-learning models using a plurality of anchor-candidate data pairs generated via the pair selection.

2. The computer-implemented method of claim 1, wherein the probability distribution is defined so that, according to the probability distribution, high similarity data samples have a higher probability of selection compared to low similarity data samples.

3. The computer-implemented method of claim 1 or 2, wherein the one or more machine-learning models are for calculating a similarity matrix between the two datasets, the evaluating of the similarity between the data samples of the anchor dataset and the candidate dataset comprises:
calculating, using the one or more machine-learning models, a similarity matrix between the data samples of the anchor dataset and the candidate dataset, wherein the selecting is performed based on the calculated similarity matrix.

4. The computer-implemented method of claim 3, further comprising:

initializing, before the pair selection, a list of used candidate data samples,

wherein the selecting of the data sample of the candidate dataset, for each data sample in the anchor dataset, comprises:

> selecting a data sample of the anchor dataset;
> generating an ordered candidate list of data samples of the candidate dataset ordered by similarity with the data sample of the anchor dataset based on the similarity matrix, wherein any data samples in the list of used candidate data samples are left out of the ordered candidate list;
> calculating a probability vector based on the probability distribution applied on the ordered candidate list;
> selecting a positive data sample from the ordered candidate list according to the probability vector;
> adding the positive data sample of the candidate dataset to the list of used candidate data samples; and
> repeating the selecting of the data sample of the anchor dataset, the generating of the ordered candidate list, the calculating of the probability vector, the selecting of the positive sample and the adding for other data samples of the anchor dataset.

5. The computer-implemented method according to any preceding claim, further comprising:
repeating the performing of the pair selection and the training of the at least one of the one or more machine-learning models using the plurality of anchor-candidate data pairs generated via the pair selection process until a value of a training loss, being optionally cross-entropy loss, converges or until a target number of iterations is reached.

6. The computer-implemented method according to any preceding claim, wherein the plurality of data samples in the dataset are audio tracks and/or segments of audio tracks.

7. The computer-implemented method of claim 6, wherein the associative metadata for each of the plurality of data samples comprises editorial data and/or user consumption data, the editorial data for an audio track comprising at least one of:

> at least one artist or at least one performer of the audio track,
> at least one composer of the audio track,
> at least one writer of the audio track,
> at least one lyricist of the audio track,
> at least one album in which the audio track appears,
> at least one producer of the audio track,

> at least one record label associated with the audio track at least one country of origin of the audio track,
> at least one language of the audio track or
> a year of release of the audio track,

the user consumption data for an audio track comprising at least one of:

> information identifying at least one user-created set of audio tracks to which the audio track belongs,
> information identifying at least one user-related set of audio tracks to which the audio track belongs, the at least one user-related set of audio tracks having been created or formed based on user listening behavior, or
> information identifying at least one editorial playlist comprising the audio track.

8. The computer-implemented method according to any preceding claim, wherein the one or more machine-learning models comprise:

> a machine-learning-based encoder for calculating embeddings based on data samples; and
> a machine-learning-based similarity model, being optionally a bilinear similarity model, for calculating a similarity matrix based on two sets of embeddings received from the machine-learning-based encoder.

9. The computer-implemented method of claim 8, wherein the machine-learning-based encoder comprises at least one residual neural network and/or at least one convolutional neural network and/or the machine-learning-based similarity model comprises a multilayer perceptron.

10. The computer-implemented method according to any of claims 8 to 9, wherein the method further comprising:
outputting the trained machine-learning-based encoder to a computing device for implementing a search, classification, tagging or recommendation engine.

11. The computer-implemented method according to any of claims 8 to 10, further comprising, following the training:

> receiving a request for comparing similarity between first and second data samples;
> calculating, using the trained machine-learning-based encoder, embeddings based on the first and second data samples; and
> calculating a numerical distance of the embeddings; and

outputting the numerical distance via at least one interface.

12. A computer-implemented method comprising:
    using a machine-learning-based encoder trained using a computer-implemented method according to any of claims 8 to 11 as a part of a search, classification, tagging or recommendation engine.

13. The computer-implemented method according to claim 12,
    wherein the plurality of data samples in the dataset are audio tracks and the search, classification, tagging or recommendation engine is a music search, classification, tagging or recommendation engine.

14. An apparatus comprising means for performing the computer-implemented method according to any preceding claim.

15. A computer program comprising program instructions for performing a computer-implemented method according to any preceding claim.

101: Maintain, in memory, machine-learning model(s) for evaluating similarity between two sets of annotated data samples

102: Obtain dataset comprising data samples annotated with associative metadata

103: Data subset(s) remaining?

No

Yes

104: Select next data subset

105: Divide data subset or part thereof randomly to anchor and candidate datasets

106: Evaluate, using machine-learning model(s), similarity between anchor & candidate datasets

107: Select, for each data sample in anchor dataset, positive data sample of candidate dataset to form an anchor–candidate data pair

108: Train at least one machine-learning model using plurality of anchor–candidate data pairs

Fig. 1

201: Perform blocks 101 to 102 of Figure 1

202: Initialize list of used candidate data samples

203: Data subset(s) remaining?

No

Yes

204: Select next data subset

205: Randomize data subset

206: Select former or latter half of data subset as anchor dataset and the other as candidate dataset

207: Calculate, using encoder & similarity model, similarity matrix

208: Anchor data sample(s) remaining?

No

Yes

209: Select next data sample of anchor dataset

210: Generate ordered candidate list based on similarity matrix

211: Calculate probability vector based on probability distribution

212: Select positive data sample from ordered candidate list according to probability vector

213: Add positive data sample to list of used candidate data samples

214: Train encoder & similarity model using anchor-candidate data pairs

Fig. 2

Fig. 3A

Fig. 3B

324: probability distribution

321

322

4 | 2 | 1 | 0

323

325: anchor–candidate pair

Fig. 3C

401: Receive request for comparing similarity between first and second data samples

402: Calculate, using trained machine-learning-based encoder, embeddings based on first and second data samples

403: Calculate distance between embeddings

404: Output distance via at least one interface

Fig. 4

501

```
                    520: Control circuitry

                    521: Pair selection
                    circuitry
510:
Tx/Rx
                    522: Training circuitry

                    523: Application
                    circuitry
```

530: Memory

531:
Software

532:
Database

Fig. 5

Europäisches Patentamt
European Patent Office
Office européen des brevets

# EUROPEAN SEARCH REPORT

**Application Number**

EP 23 16 6945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERENZWEIG A ET AL: "Anchor space for classification and similarity measurement of music", PROCEEDINGS OF THE 2003 INTERNATIONAL CONFERENCE ON MULTIMEDIA AND EXPO: 6 - 9 JULY 2003, BALTIMORE MARRIOTT WATERFRONT HOTEL, BALTIMORE, MARYLAND, USA, IEEE OPERATIONS CENTER, US, vol. 1, 6 July 2003 (2003-07-06), page 29, XP032964555, DOI: 10.1109/ICME.2003.1220846 ISBN: 978-0-7803-7965-7 | 1-5, 7-12,14, 15 | INV. G06N20/20 ADD. G06N3/045 |
| A | * pages I-29 - pages I-32, right-hand column, paragraph 3 * ----- | 6,13 | |
| A | FERRARO ANDRES ET AL: "Enriched Music Representations With Multiple Cross-Modal Contrastive Learning", IEEE SIGNAL PROCESSING LETTERS, IEEE, USA, vol. 28, 5 April 2021 (2021-04-05), pages 733-737, XP011852106, ISSN: 1070-9908, DOI: 10.1109/LSP.2021.3071082 [retrieved on 2021-04-26] * the whole document * ----- | 1-15 | |
| A | QINGQING HUANG ET AL: "MuLan: A Joint Embedding of Music Audio and Natural Language", ARXIV.ORG, CORNELL UNIVERSITY LIBRARY, 201 OLIN LIBRARY CORNELL UNIVERSITY ITHACA, NY 14853, 26 August 2022 (2022-08-26), XP091302942, * the whole document * ----- -/-- | 1-15 | |

TECHNICAL FIELDS SEARCHED (IPC)

G06N

The present search report has been drawn up for all claims

| Place of search | Date of completion of the search | Examiner |
|---|---|---|
| The Hague | 13 September 2023 | Volkmer, Markus |

EPO FORM 1503 03.82 (P04C01)

**page 1 of 2**

Europäisches
Patentamt

European
Patent Office

Office européen
des brevets

**EUROPEAN SEARCH REPORT**

Application Number

**EP 23 16 6945**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALEXANDER SCHINDLER ET AL: "Multi-Task Music Representation Learning from Multi-Label Embeddings", ARXIV.ORG, CORNELL UNIVERSITY LIBRARY, 201 OLIN LIBRARY CORNELL UNIVERSITY ITHACA, NY 14853, 17 September 2019 (2019-09-17), XP081482933, * the whole document * ----- | 1-15 | |
| A | WO 2012/154470 A1 (GOOGLE INC [US]; HEITZ GEREMY A III [US] ET AL.) 15 November 2012 (2012-11-15) * the whole document * ----- | 1-15 | |
| A | US 2021/294840 A1 (LEE JONGPIL [KR] ET AL) 23 September 2021 (2021-09-23) * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 13 September 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 6945

This annex lists the patent family members relating to the patent documents cited in the above-mentioned European search report.
The members are as contained in the European Patent Office EDP file on
The European Patent Office is in no way liable for these particulars which are merely given for the purpose of information.

13-09-2023

| Patent document cited in search report | | Publication date | Patent family member(s) | | Publication date |
|---|---|---|---|---|---|
| WO 2012154470 | A1 | 15-11-2012 | EP | 2707815 A1 | 19-03-2014 |
| | | | US | 2012290621 A1 | 15-11-2012 |
| | | | US | 2018357312 A1 | 13-12-2018 |
| | | | WO | 2012154470 A1 | 15-11-2012 |
| US 2021294840 | A1 | 23-09-2021 | US | 2021294840 A1 | 23-09-2021 |
| | | | US | 2023097356 A1 | 30-03-2023 |

For more details about this annex : see Official Journal of the European Patent Office, No. 12/82